# Europäisches Patentamt
# European Patent Office
# Office européen des brevets

(11) Publication number: **0 193 345**
**B1**

(12) **EUROPEAN PATENT SPECIFICATION**

(45) Date of publication of patent specification: **02.01.91**

(51) Int. Cl.⁵: **A 23 L 1/05,** A 23 L 1/39, A 23 L 2/38

(21) Application number: **86301161.5**

(22) Date of filing: **19.02.86**

(54) A dry food product reconstitutable with cold or hot aqueous liquid and a process for making same.

(30) Priority: **23.02.85 DE 3506513**

(43) Date of publication of application:
**03.09.86 Bulletin 86/36**

(45) Publication of the grant of the patent:
**02.01.91 Bulletin 91/01**

(84) Designated Contracting States:
**AT BE CH DE FR GB IT LI LU NL SE**

(56) References cited:
**DE-A-2 938 596**
**GB-A-2 132 869**
**US-A-3 443 964**
**US-A-3 650 770**
**US-A-3 955 009**
**US-A-4 081 567**

(73) Proprietor: **CPC INTERNATIONAL INC.**
**International Plaza P.O. Box 8000**
**Englewood Cliffs New Jersey 07632 (US)**

(72) Inventor: **Glittenberg, Detlev, Dr.**
**Friedhofstrasse 13/2**
**D-7102 Weinsberg (DE)**
Inventor: **Stute, Rolf, Dr.**
**Bisseckerweg 7**
**D-7101 Flein (DE)**

(74) Representative: **Wilkinson, Stephen John et al**
**c/o Stevens, Hewlett & Perkins 5 Quality Court**
**Chancery Lane**
**London WC2A 1HZ (GB)**

Courier Press, Leamington Spa, England.

## Description

The invention relates to a dry food product reconstitutable with cold or hot aqueous liquid to yield a fruit sauce, fruit soup, fruit juice, compote, concassée, savoury vegetable containing soup or snack meal of a pulpy structure, which contains added starch and, optionally, further consistency- and/or structure-imparting components as well as at least one taste- and flavor-imparting dry vegetable and/or fruit substance component (fruit substance) and to a process for producing said product.

Dry products of the type herein described have been known for many decades and, so far as taste is concerned have for a fairly long time shown a quality which as a rule may be described as fully satisfactory and only insignificantly if at all different from that of corresponding drinks or foods or food components, prepared from fresh raw material by the housewife at home. However,,preparations made from these well-known dry products are as a rule characterized by a smooth, homogeneous structure which is in fact frequently regarded as highly desirable considering that the housewife herself in preparing this kind of soup, sauce or the like from fresh raw materials in the kitchen expressly intends to obtain such a smooth, creamy consistency, which is essentially attributable to the starch added to the product.

Added starches used for this purpose include, apart from so-called native starches, i.e. starches which have simply been isolated from the plant and are present in pure form and which require a heating step to gelatinize, so-called pregelatinized and therefore cold-swelling starches which may be produced in different ways, the most commonly used method being the roll-drying process in which the starch is pregelatinized and dried simultaneously on the roll or pregelatinized in a separate step and then subjected to roll-drying.

In certain cases, however, as when preparing proper home-made tomato sauce, hot apple sauce and apple compote or "potages", the housewife intends to and does achieve a pulpy texture or structure, which is an essential organoleptic quality criterion lacking in the corresponding soups, sauces, etc. prepared from dry products today. Experts, having of course been aware of this deficiency for some time, have in many different ways tried to develop dry products which in combination with aqueous liquids yield juices, sauces, soups, etc. of a pulpy structure resembling that of more or less finely pureed vegetables or fruits of the type in question, e.g. "tomato concassée", but a solution which is satisfactory in every respect has not yet been found.

In particular, the attempt to solve the above problem by adding to the "non-starch components" of this type of dry product a gelatinized, cross-linked and/or high-amylose powdered starch product and heating this mixture to at least 72°C in order to cause the starch particles to swell (U.S. Patents 3,443,964, 3,579,341 and 3,650,770) or the proposal to produce a dry product for "tomato drinks" by subjecting an aqueous mixture of tomato solids and gelatinizable starch materials whose starch to water ratio has been selected so as to allow only a limited or partial gelatinization of the starch grains, to a roll drying process (US Patent 4,031,266), have proved to be at most moderately successful.

The only genuinely satisfactory solution to this problem known so far is based on the proposal to use at least as part of the added starch a so-called "starch sponge" which is preferably charged with the fruit substance by impregnating or incorporating the latter in the starch matrix during production of the sponge (German Patent 2,938,596). Reconstituted with hot aqueous liquids, these known dry products do in fact yield sauces, soups, juices or compotes of an excellent pulpy structure and thus provide per se a perfect solution for the above problem. However, they do have the following disadvantages:

a) The production of the starch sponge is time-consuming and comparatively expensive.

b) The cooking stability of the starch sponge is limited in as much as after prolonged cooking it slowly changes back to a normal starch paste so that the initially distinctly pulpy texture gradually becomes weaker and eventually disappears.

c) The reconstitution by cold aqueous liquids is frequently slow and incomplete.

It is an object of this invention, therefore, to provide dry food products of the above-mentioend type which avoid the disadvantages of the prior art and, in particular, are equivalent to the best of the known products, i.e. those which contain added starch at least partially in the form of starch sponge. The soups, sauces, compotes, etc., prepared from the products of the invention show not only a pulpy structure or texture which even experts are hardly able to distinguish, without auxiliary means, from the structure or texture of foods prepared from fresh vegetables and/or fruits by the housewife at home, but also they are superior to the starch sponge-containing product in respect of cooking stability of the structure and the speed of reconstitution in cold aqueous liquids. Furthermore, the invention provides a process for producing such dry food products which is less costly than the production of corresponding products based on starch sponge.

This object of the invention is accomplished on the basis of the surprising discovery that leguminous pre-gelatinized starches, as they are obtained by drying a leguminous starch gelatinized under "gentle" conditions, e.g. by roll drying a suspension of a native leguminous starch, rehydrate in aqueous liquids not to a smooth starch sol or gel, but to a pulpily textured paste of a concassée-like structure. A further discovery in that, while reconstitution in cold, aqueous liquids is distinctly faster and more complete, compared to starch sponges, the structure still remains much stabler during cooking than that of starch sponges.

Accordingly, the invention comprises a dry food product reconstitutable with cold or hot aqueous liquid to a pulpily structured fruit sauce, soup, juice, compote, concassée, savoury vegetable-containing soup or snack meal containing added starch and, optionally, further consistency- and/or structure-imparting components as well as at least one taste- and/or flavor-imparting dry vegetable and/or fruit component (fruit substance), characterized in that the added starch consists at least partially of cold-swelling leguminous pre-gelatinized starch.

Gelatinization "under gentle conditions", as mentioned above, is meant to denote conditions which resemble those commonly present in roll-drying, in which, as is generally known, highly concentrated aqueous starch dispersions are gelatinized essentially under thermal conditions, i.e. without being exposed to any major shearing forces, at temperatures which during the gelatinizing step do not substantially exceed 100°C and are then dried on steam-heated rolls.

The leguminous pre-gelatinized starches which in accordance with the invention are used—at least partially—as added starch rehydrate readily in aqueous media and in the presence of finely dispersed fruit substance even at room temperature yielding a product which, in terms of organoleptic properties and in particular texture, closely resembles a concassée of corresponding fruit pulp and do not lose such properties and texture even after prolonged cooking. Present in comparatively small amounts, such starches impart to the finished product the pulpy texture characteristic of the invention.

Thus, in the simplest of cases it is sufficient to replace part of the added starch normally present in known dry products as thickening agent by leguminous pre-gelatinized starch. For this purpose it is possible either to add previously prepared leguminous pre-gelatinized starch to the remaining product components or, preferably, to convert leguminous starch "in situ" to leguminous pre-gelatinized starch. The fineness and extent of texturing may be selectively varied within wide limits by an appropriate choice of the grain size and amount of leguminous starch component used, the fineness of texture being proportional to the grain size and the extent of texturing increasing as the grain size becomes larger while the amount of leguminous pre-gelatinized starch remains constant.

A certain texturing may also be achieved by adding as fruit substance a fruit pulp of appropriate grain size which has been dried by freeze-drying or similar structure-preserving process. However, this product component which may optionally be used for the purposes of the invention is not only relatively expensive, but, even if all fruit substance is added in this form, does not by itself produce a texturing effect as pronounced as that of the leguminous pre-gelatinized starch proposed by the invention.

As a rule a distinct texturing effect may be achieved by adding only part of the added starch in the form of leguminous pre-gelatinized starch. The rest may then be added in the form of "normal" pre-gelatinized starch, native starch and/or, preferably, starch sponge. It should be noted in this connection that the obviously superior rehydrating properties in cold aqueous liquids and the higher cooking stability of leguminous pre-gelatinized starches, compared to starch sponges originating from other starches, are characteristic also of leguminous starch sponges. So, for the purpose of the invention the leguminous pre-gelatinized starch may be wholly or partially in sponge form.

Leguminous starches having amylose contents of 50 or more per cent by weight, when used for the purposes of this invention, do not in themselves pose any problems, but they are neither necessary nor superior to leguminous starches with lower amylose contents, so that leguminous pre-gelatinized starches with amylose contents of at most 50 per cent by weight are preferred.

The proportion of leguminous swelling starch in the total content of added starch is appropriately at least 50, preferably at least 70, and more preferably at least 85 w/w% leguminous pre-gelatinized starch, unless the remaining added starch consists of starch sponge which equally yields a pulpy texture and/or unless the dry product contains additionally other components which impart a pulpy texture.

The most economical and at the same time most reliable method of producing leguminous pre-gelatinized starches suitable for the purposes of the invention is that of roll-drying dispersions of preferably granular leguminous starches. Dry food products whose content of leguminous pre-gelatinized starch consists predominantly (preferably more than 70 and more preferably at least 85 w/w%) of pre-gelatinized starch obtained by roll-drying an aqueous dispersion of granular leguminous starch are therefore preferred.

It should be noted that the reconstituting properties of the leguminous pre-gelatinized starches to be used for the purposes of the invention may be improved further by so-called conditioning, i.e. a heat treatment after drying, in which optimum conditions (time and temperature) depend of course on the circumstances of the particular case and can be empirically determined by experts without any difficulty. When producing leguminous pre-gelatinized starches by roll-drying, the conditioning step is preferably carried out immediately after drying on the rolls.

The total content of added starch present in the dry food products of the invention, suitably lies in the range 2 to 98 w/w% based on total weight. Clearly, within this range there are preferences depending upon the nature of the product. For example for the tomato containing product the total content is preferably between 2 and 70, more preferably 3.5 and 50, and most preferably between 5 and 25 w/w%, based on total weight.

The texture-forming properties of the leguminous pre-gelatinized starches used in the dry food products of this invention depend, inter alia, on the grain size which is preferably selected so as to range between 0.1 and 10, more preferably between 0.15 and 8, and most preferably between 0.2 and 6 mm, i.e., the (usually flaked) starch particles pass through a sieve having openings of the appropriate width (upper value) and are retained on such sieve (lower value) respectively.

While the fruit substance of dry food products according to the invention may, as already mentioned, be present wholly in the form of fruit powder, experience has shown that it is more advantageous to add at most part of it in this way and/or in the form of freeze-dried fruit pulp and, preferably, at least part of it sorptively bound and/or preferably incorporated in the starch matrix, e.g. in the form of compound starch sponge (cf. German Patent 2,938,596).

Added starches suitable for the purpose of the invention may not only be starches in the literal sense of the word, but generally also starch material which are known to be equivalent to those starches when used in home-cooking, e.g., in particular flours high in starch.

According to experience gained to date, any type of leguminous starch may, in principle, be used for the purposes of the invention. Leguminous pre-gelatinized starches derived from Phaseolus vulgaris, Phaseolus mungo (radiatus, Vigna radiata), Phaseolus crysantus, Phaseolus aconitifolius, Phaseolus lunatis, Dolichos lablab, dolichos biflorus, Vicia faba L, Psophocarpus tetragonoglobus, Cicer arietum, Cajanus cajan, Vigna unguiculata (sinensis), Pisum sativum L. and/or Lens culinaris are particularly well suited for the purpose of the invention.

As already mentioned, it is sufficient simply to add to the dry product leguminous pre-gelatinized starch of the appropriate grain size. More often than not, however, it is of advantage to use so-called compound leguminous pre-gelatinized starches, i.e. leguminous pre-gelatinized starches into which one or several other recipe component(s), in particular to the fruit substance(s), have been incorporated, e.g. by impregnating the leguminous pre-gelatinized starch with a solution or dispersion of the component(s), in question or, preferably, by roll-drying an aqueous mixture of, optionally gently gelatinized, leguminous starch and the product component(s) to be incorporated into it. Preferable for the purpose of this invention are in particular dry food products which contain at least 5, preferably at least 20, and more preferably 50 w/w% of the fruit substance in the form of compound leguminous pre-gelatinized starch as well as, optionally, compound starch sponge.

Particularly suitable are compound leguminous pre-gelatinized starches which contain 10 to 95, preferably 25 to 80, and most preferably 35 to 65 w/w% of starch.

Regarding the type of fruit substances to be incorporated into the dry food products of this invention, it is noted that preference should be given to dry food products which contain as fruit substance tomato, apple, horseradish, orange, pear, apricot, raspberry, blackberry, red current, carrot, mushroom, caleriac, leek, cauliflower, or spinach.

In summary, the product according to the invention which comprises leguminous pre-gelatinized starch has the following advantages:

1. Leguminous swelling starches have a more or less neutral taste, which is of considerable importance especially when they are used in combination with fruit substances having a fine and easily suppressed taste.

2. The fat content of leguminous starches is very low which not only ensures good storage stability but also renders the addition of stabilizers, such as phosphates, during roll-drying unnecessary, which is indispensable when using high-lipid cereal starches or flours in order to prevent rancidity.

3. When using leguminous starches it is unnecessary to solve the problem of texturing, as in the known proposals, by selecting starches which are chemically cross-linked and thus limited in their swelling properties (US Patents 3,443,964 and 3,579,341), but also unnecessary to add other components e.g. those declarable as additives under the provisions of food law, such as microcrystalline cellulose. It should be noted, however, that, if desired for specific applications, the use of such additives as well as of flours or other starches is possible and requires no major changes in the process nor the acceptance of disadvantages in the finished product.

4. Leguminous pre-gelatinized starches and, accordingly, the dry food products of this invention have genuine instant properties, i.e. they show remarkable swelling properties in cold aqueous liquids and so require no heating, as do, e.g., starch sponges, to rehydrate smoothly and rapidly. The leguminous pre-gelatinized starches forming the characterizing component of the dry food products of the invention thus show the same swelling behavior in cold water as "normal" pre-gelatinized starches.

5. The ability of the leguminous pre-gelatinized starches to develop a pulpy texture on rehydration may be increased by a commonly known conditioning step, i.e. heat treatment at an appropriately selected water content, which when using the roll-drying process, may advantageously be carried out subsequently to the roll-drying process proper, provided roll-drying is performed in such a manner that the water content in the starch when the film is taken off the roll is the same as that required for the conditioning step.

6. With leguminous starches it is possible to obtain products of a uniform appearance even if the proportions of added starches are very high, because unlike most of the known processes mentioned before, this invention not only allows separate production of the starch system conferring the pulpy texture, but also the production of compound leguminous pre-gelatinized starches especially by roll-drying the starch jointly with other product components, in particular the fruit and vegetable portions.

7. To achieve a good pulpy structure, it is by no means necessary for the leguminous pre-gelatinized starches to show amylose contents of more than 50% (cf. US Patent 3,650,770). As illustrated in the examples, amylose contents of less than 40% are sufficient.

Pulpily textured systems can be properly described only by sensorial judgement, and thus inherently subjective parameters (appearance, mothfeel, etc.). The examples and comparison tests which follow however and which serve to illustrate the invention and its advantages specify in addition to the usual parameters such as particle size distribution (which should preferably range between 1 and 4 mm) nd particle form (which should be largely uniformly three-dimensionally) the following objective parameters intended to characterize pulpily textured products:

I. Cooking residue

At a given particle size distribution, the cooking residue provides a measure of stability under standardized cooking conditions and the pulpy texture of the reconstituted dry product. It is determined as follows:

15 g of the product to be examined are cooked in 500 ml water for a specific time (2 and 10 min. resp.), whereupon the sample is poured through a sieve having openings of a width of 500 µm and the sieve residue is weighed and shown as "cooking residue" in g.

II. Sediment

The sediment provides a measure of the water-absorptive capacity or swelling properties of the system in question and is determined as follows:

20 g of the dry product to be examined are heated in 250 ml water, boiled and subsequently centrifuged for 3 minutes at an acceleration of 1,400—4,000 g, whereupon the clear phase is separated and the moist sediment weighed. The sediment is given in per cent (weight of sediment, based on total weight of sample).

III Cold residue

The cold residue reflects the water-absorptive capacity after 5 minutes of hydrating with tap water or the cold swelling behavior and is determined as follows:

15 g of the dry product to be examined are left to swell in 500 ml of cold (room temperature) water for 5 minutes, whereupon the sample is poured through a sieve having openings of a width of 500 µm, and the sieve residue is weighed and shown as "cold residue" in g.

Example 1

An aqueous slurry of 1,65 kg starch derived from smooth peas (amylose content approximately 34 w/w%) in 3.35 kg water was dried with the aid of a paired roll dryer at a heating steam pressure of 2—5 bars and a speed of rotation of 1—3 rpm (corresponding to a film residence time of 10—30 sec.).

The dried film was crushed and pressed through a sieve having openings of a width of 4 mm. The resulting leguminous pre-gelatinized starch was present in the form of "flakes".

A mixture of these "leguminous pre-gelatinized starch flakes" and tomato powder at a ratio of 1:1 prepared in the cold or hot state (e.g. 20 g in 200 ml water) gave a ready-to-eat product (tomato sauce) of a good pulpy texture.

Even after reconstituting under sterilizing conditions (45 min at 121°C) a preparation obtained in this manner (80 g per liter) still showed a highly viscous pulply structure.

Example 2

A mixture of 1.5 kg starch of smooth peas, 4.1 kg tomato pulp (36° Bx corresponding to 1.467 kg D.S.), 2.2 kg water and 50 g citric acid was roll-dried and crushed under the conditions described in Example 1.

By reconstituting 20 g of the resulting dry product with 200 ml of boiling water, a ready-to-eat product of good pulpy texture was obtained which, compared to a dry product (mixture) reconstituted in the same manner as described in Example 1, showed a much more homogeneous appearance.

To check whether the excellent properties of this product of the invention were in fact mainly attributable to the use of pea starch, dry products were prepared in an analogous manner using potato starch. To improve their properties, these "control products", were at the end of the roll-drying step subjected to a conditioning treatment (re-drying) of different intensity. The sensorial properties and cooking residue values of the dry products of the invention and of the control products are shown in Table I below:

EP. 0 193 345 B1

TABLE I

| Dry product | Cooking residue (g) after 10 min. cooking time | Organoleptic evaluation |
|---|---|---|
| Example 2 (invention) | 100 | good pulpy texture resembling "concassée" |
| Control (flakes analogous, but made with potato starch instead of smooth peas) | 1 to max. 55* | even at max. cooking residue at most paplike structure |

*The maximum value is obtainable only by optimized conditioning at the end of the roll-drying step, which is not required when using the starch of smooth peas.

As is evident not only from the sensorial judgement but also from the measured values of Table I, the product made from leguminous starch in accordance with the invention was clearly superior to the control produts made from potato starch in terms of pulpy texture.

Example 3

Example 2 was repeated using a roll-drying operating on the applicator roll principle instead of the pond principle. In in this manner a thicker "flake" was obtained, which had a positive effect on the mechanical stability of the flakes and the pulpy texture of the reconstituted product.

Comparison test 1

A "tomato sponge" was made from potato starch as described in Example 1 of German Patent No. 2,938,596. This "tomato sponge" and the product of Example 2 were each cooked in water for 2 min. in a concentration of 15 g/500 ml each.

As may be seen from Table II, both products after a cooking time of 2 min. showed a comparable pulpy texture which corresponded to the visual impression.

TABLE II

| Product | Cooking residue (g) after 2 min. cooking time | Sediment % | Organoleptic evaluation |
|---|---|---|---|
| Comparison test 1: state of the art according to German Patent 2,938,596 | 120 | 62 | very good pulpy texture resembling "concassée" |
| Example 2 (invention) | 120 | 56 | comparable pulpy texture |

The two dry products were similar also in terms of water-absorptive capacity which is determined via the sediment.

Differences between the two compared products became evident, however, upon prolonged cooking, whereby the known product of Comparison Test 1 lost its coarsely pulpy texture more rapidly than that prepared from the dry product of this invention as described in Example 2.

Significant differences were also noted in the cold-swelling properties, as may be seen from Table III.

TABLE III

| Product | Cold residue (g) | Organoleptic evaluation |
|---|---|---|
| Comparison Test 1 (state of the art) | 70 | deposition of partially hydrated discrete particles |
| Example 2 (invention) | 136 | homogeneous pulpy product |

6

The dry product of the invention thus showed a much better rehydration behavior in cold water than the compound starch sponge known from German Patent No. 2,938,596.

### Example 4

1 kg fresh mushrooms were mashed, mixed with 1.6 kg pea starch and then roll-dried under the conditions described in Example 1.

Upon rehydration of 20 g of the resulting flakes by addition of 200 ml hot water a pulpy product having the characteristic mushroom flavor was obtained.

### Example 5

9 kg of leek was precooked for about 10 minutes, then mashed and mixed with 3.6 kg pea starch. The roll-drying of the resulting mass was performed under the conditions described in Example 1.

Upon rehydration of 20 g of the product by addition of 200 g hot water a pulpy product having a characteristic leek flavor was obtained.

### Example 6

10 kg frozen spinach was thawed, then 1 kg of pea starch and 600 g of a commercial bouillon mass were admixed and the whole roll-dried under the conditions described in Example 1.

Upon addition of 20 g of the resulting flakes to 200 ml water and short heating a product having a consistency and appearance resembling that of freshly cooked spinach and a good flavor was obtained.

### Example 7

10 kg frozen, strained raspberry mash was thawed. After 1.1 kg of pea starch had been admixed the whole was roll-dried under the conditions described in Example 1. 20 g of the resulting flakes were rehydrated with 200 ml water containing 20 g sugar.

Upon addition of boiling water to the flakes a pulpy homogeneous and well-tasting fruit sauce was obtained. Further boiling was not necessary. When boiled the pulpiness of the product was gradually reduced. The water can be replaced by milk, which results in a product resembling that of a porridge prepared from oat flakes.

## Claims

1. A dry food product reconstitutable with cold or hot aqueous liquid to a pulpily structured fruit sauce, soup, juice, compote, concassée, savoury vegetable—containing soup or snack meal containing added starch, and optionally, further consistency—and/or structure-imparting components as well as at least one taste- and/or flavor imparting dry vegetable and/or fruit component (fruit substance), characterized in that the added starch consists at least partially of cold-swelling leguminous pre-gelatinized starch.

2. The dry food product of Claim 1, characterized in that the leguminous pre-gelatinized starch has an amylose content of at most 50 w/w%.

3. The dry food product of Claim 1 or Claim 2, characterized in that at least 50, preferably at least 70 and most preferably at least 85 w/w% of the added starch is a leguminous pre-gelatinized starch.

4. The dry food product of any one of Claims 1 to 3, characterized in that the leguminous pre-gelatinized starch comprises preponderantly, preferably more than 70, and more preferably at least 85 w/w% of pre-gelatinized starch obtainable by roll-drying an aqueous dispersion of one or more granular leguminous starch.

5. The dry food product of any one of Claims 1 to 4, characterized in that as leguminous pre-gelatinized starch it contains starch of Phaseolus vulgaris, Phaseolus mungo (radiatus, Vigna radiata), Phaseolus crysanthus, Phaseolus aconitifolius, Phaseolus lunatis, Dolichos Lablab, Dolichos bifluorus, Vicia faba L., Psophocarpus tetragonolobus, Cicer arietum, Cajanus caja, Vigna unguiculata (sinensis), Pisum sativum L., and/or Len culinaris.

6. The dry food product of any one of Claims 1 to 5, characterized in that it contains, based on total weight, 2 to 98% added starch.

7. The dry food product of any of Claims 1 to 6, characterized in that the leguminous pre-gelatinized starch has a particle size of 0.1 to 10, preferably of 0.15 to 8, and more preferably of 0.2 to 6 mm.

8. The dry food product of any one of Claims 1 to 7, characterized in that at least part of the leguminous pre-gelatinized starch comprises at least one further product component, preferably fruit substance, which is sorptively bound and/or preferably, incorporated in the starch matrix (compound leguminous pre-gelatinized starch).

9. The dry food product of Claim 8, characterized in that at least 5, preferably at least 20, and more preferably at least 50 w/w% of the fruit substance is present in the form of compound leguminous pre-gelatinized starch.

10. The dry food product of Claim 8 or Claim 9, characterized in that the compound leguminous pre-gelatinized starch contains 10 to 95, preferably 25 to 80, and more preferably 35 to 65 w/w% starch.

11. The dry food product of any one of Claims 1 to 10, characterized in that the fruit substance contained therein is present at least partially in the form of fruit powder, freeze-dried fruit pulp and/or compound starch sponge.

12. The dry food product of any one of Claims 1 to 11, characterized in that as fruit substance it contains dry substance of tomato, apple, orange, pear, apricot, raspberry, blackberry, red current, carrot, horseradish, mushroom, celeriac leek, cauliflower or spinach.

13. A process for producing a dry food product according to any one of Claims 1 to 12 by mixing fruit substance with starch and, optionally, flavoring agents, filling agents and/or enhancers as well as, optionally, further thickening agents, characterized in that at least part of the added starch is leguminous starch which prior to, during or after mixing with one or several other product component(s) is at least partially converted into leguminous pre-gelatinized starch of a grain size of 0.1 to 10 mm by the known process of pre-gelatinizing under gentle conditions and drying, followed if necessary by size reduction.

14. The process of Claim 13 in which the pre-gelatinization is carried out by roll-drying.

15. The process of Claim 13 or Claim 14 characterized in that the leguminous pre-gelatinized starch is subjected to a heat treatment after drying.

## Patentansprüche

1. Trockenes Nahrungsmittelprodukt, rekonstituierbar mit kalter oder heißer wäßriger Flüssigkeit zu musartig strukturierter Fruchtsauce, -suppe, -saft, Kompott, Concassée, pikantes Gemüse enthaltender Suppe oder Zwischenmahlzeit, das zugesetzt Stärke und gegebenenfalls zusätzliche Konsistenz- und/oder Struktur-verleihende Bestandteile, wie auch mindestens einen Geschmack- und Aroma-verleihenden trockenen Gemüse- und/oder Fruchtbestandteil (Fruchtsubstanz) enthält, dadurch gekennzeichnet, daß die zugesetzte Stärke zumindest teilweise aus kalt-quellender vorgelatinierter Stärke aus Hülsenfrüchten besteht.

2. Trockenes Nahrungsmittelprodukt nach Anspruch 1, dadurch gekennzeichnet, daß die vorgelatinierte Stärke aus Hülsenfrüchten einen Amylosegehalt von höchstens 50% (Gew./Gew.) aufweist.

3. Trockenes Nahrungsmittelprodukt nach Anspruch 1 oder Anspruch 2, dadurch gekennzeichnet, daß mindestens 50, vorzugsweise mindestens 70 und noch besser mindestens 85% (Gew./Gew.) der zugesetzten Stärke eine vorgelatinierte Stärke aus Hülsenfrüchten ist.

4. Trockenes Nahrungsmittelprodukt nach einem der Ansprüche 1 bis 3, dadurch gekennzeichnet, daß die vorgelatinierte Stärke aus Hülsenfrüchten vorwiegend, vorzugsweise mehr als 70 und noch besser mindestens 85% (Gew./Gew) vorgelatinierte Stärke enthält, die durch Rolltrocknung einer wäßrigen Dispersion einer oder mehrerer körniger Stärken aus Hülsenfrüchten erhältlich ist.

5. Trockenes Nahrungsmittelprodukt nach einem der Ansprüche 1 bis 4, dadurch gekennzeichnet, daß es als vorgelatinierte Stärke aus Hülsenfrüchten Stärke von Phaseolus vulgaris, Phaseolus mungo (radiatus, Vigna radiata), Phaseolus crysantus, Phaseolus aconitifolius, Phaseolus lunatis, Dolichos, lablab, Dolichos biflurus, Vicia faba L., Phosphocarpus tetragonolobus, Cicer arietum, Cajanus cajan, Vigna unguiculata (sinensis), Pisum sativum L. und/oder Len culanaris enthält.

6. Trockenes Nahrungsmittelprodukt nach einem der Ansprüche 1 bis 5, dadurch gekennzeichnet, daß es, auf Basis des Gesamtgewichtes, 2 bis 98% zugesetzt Stärke enthält.

7. Trockenes Nahrungsmittelprodukt nach einem der Ansprüche 1 bis 6, dadurch gekennzeichnet, daß die vorgelatinierte Stärke aus Hülsenfrüchten eine Teilchengröße von 0.1 bis 10, vorzugsweise 0.15 bis 8 und noch besser 0.2 bis 6 mm besitzt.

8. Trockenes Nahrungsmittelprodukt nach einem der Ansprüche 1 bis 7, dadurch gekennzeichnet, daß mindestens ein Teil der vorgelatinierten Stärke aus Hülsenfrüchten mindestens einen weiteren Produktbestandteil, vorzugsweise Fruchtsubstanz, enthält, der sorptiv gebunden und/oder, vorzugsweise, in die Stärkmatrix inkorporiert ist (zusammengesetzte vorgelatinierte Stärke aus Hülsenfrüchten).

9. Trockenes Nahrungsmittelprodukt nach Anspruch 8, dadurch gekennzeichnet, daß mindestens 5, vorzugsweise mindestens 20 und noch besser mindestens 50% (Gew./Gew.) der Fruchtsubstanz in Form einer zusammengesetzten vorgelatinierten Stärke aus Hülsenfrüchten vorhanden ist.

10. Trockenes Nahrungsmittelprodukt nach Anspruch 8, oder Anspruch 9, dadurch gekennzeichnet, daß die zusammengesetzte vorgelatinierte Stärke aus Hülsenfrüchten 10 bis 95, vorzugsweise 25 bis 80 und noch besser 35 bis 65% (Gew./Gew.) Stärke enthält.

11. Trockenes Nahrungsmittelprodukt nach einem der Ansprüche 1 bis 10, dadurch gekennzeichnet, daß die darin enthaltene Fruchtsubstanz mindestens teilweise in Form von Fruchtpulver, gefriergetrocknetem Fruchtfleisch und/oder zusammengesetztem Stärkeschwamm vorliegt.

12. Trockenes Nahrungsmittelprodukt nach einem der Ansprüche 1 bis 11, dadurch gekennzeichnet, daß es als Fruchtsubstanz Trockensubstanz von Tomaten, Äpfeln, Orangen, Birnen, Aprikosen, Himbeeren, Brombeeren, roten Johannisbeeren, Karotten, Meerrettisch, Pilzen, Sellerie, Lauch, Blumenkohl oder Spinat enthält.

13. Verfahren zur Herstellung eines trockenen Nahrungsmittelproduktes gemäß einem der Ansprüche 1 bis 12 durch Mischen von Fruchtsubstanz mit Stärke und, fakultativ, mit Geschmacksmitteln, Füllmitteln und/oder Verstärkern wie auch, fakultativ, mit weiteren Verdickungsmitteln, dadurch gekennzeichnet, daß mindestens ein Teil der zugesetzten Stärke Stärke aus Hülsenfrüchten ist, die vor, während oder nach dem Mischen mit einem oder mehreren anderen Produktbestandteil(en) mindestens teilweise durch das bekannte Verfahren der Vorgelatinierung unter milden Bedingungen und Trocknen, gefolgt erforderlichenfalls von Größenreduktion, in vorgelatinierte Stärke aus Hülsenfrüchten mit einer Korngröße von 0.1 bis 10 mm umgewandelt wird.

14. Verfahren nach Anspruch 13, bei dem die Vorgelatinierung durch Rolltrocknung durchgeführt wird.

15. Verfahren nach Anspruch 13, oder Anspruch 14, dadurch gekennzeichnet, daß die vorgelatinierte Stärke aus Hülsenfrüchten nach dem Trocknen einer Hitzebehandlung unterworfen wird.

**Revendications**

1. Produit alimentaire déshydraté reconstituable avec un liquide aqueux froid ou chaud pour donner un coulis de fruits, une purée de fruits, un jus de fruits, une compote, une marmelade, une soupe aux fines herbes ou un plat préparé texturé, contenant de l'amidon ajouté et, facultativement, d'autres constituants conférant une consistence et/ou une structure, ainsi qu'au moins un constituant déshydraté à base de légumes et/ou de fruits (substance aux fruits) destiné à conférer un goût et/un une flaveur, caractérisé en ce que l'amidon ajouté consiste au moins partiellement en un amidon prégélatinisé de légumineuses, gonflant à froid.

2. Produit alimentaire déshydraté suivant la revendication 1, caractérisé en ce que l'amidon prégélatinisé de légumineuses possède une teneur en amylose au plus égale à 50% en poids/poids.

3. Produit alimentaire déshydraté suivant la revendication 1 ou la revendication 2, caractérisé en ce qu'une quantité d'au moins 50, avantageusement au moins 70 et de préférence au moins 85% en poids/poids de l'amidon ajouté est constituée d'un amidon prégélatinisé de légumineuses.

4. Produit alimentaire déshydraté suivant l'une quelconque des revendications 1 à 3, caractérisé en ce que l'amidon prégélatinisé de légumineuses comprend de manière prépondérante, avantageusement en une quantité supérieure à 70 et de préférence d'au moins 85% en poids/poids, un amidon prégélatinisé pouvant être obtenu par déshydratation dans un sécheur à cylindres d'une dispersion aqueuse d'un ou plusieurs types d'amidon granulaire de légumineuses.

5. Produit alimentaire déshydraté suivant l'une quelconque des revendications 1 à 4, caractérisé en ce qu'il contient, comme amidon prégélatinisé de légumineuses, de l'amidon de Phaseolus vulgaris, Phaseolus mungo (radiatus, Vigna radiata), Phaseolus crysanthus, Phaseolus aconitifolius, Phaseolus, lunatis, Dolichos lablab, Dolichos biflorus, Vicia faba L., Psophocarpus tetragonolobus, Cicer arietum, Cajanus cajan, Vigna unguiculata (sinensis), Pisum sativum L. et/ou Lens culinaris.

6. Produit alimentaire déshydraté suivant l'une quelconque des revendications 1 à 5, caractérisé en ce qu'il contient, sur la base du poids total, 2 à 98% d'amidon ajouté.

7. Produit alimentaire déshydraté suivant l'une quelconque des revendications 1 à 6, caractérisé en ce que l'amidon prégélatinisé de légumineuses possède un diamètre de particules de 0,1 à 10, avantageusement de 0,15 à 8 et, de préférence, de 0,2 à 6 mm.

8. Produit alimentaire déshydraté suivant l'une quelconque des revendications 1 à 7, caractérisé en ce qu'au moins une partie de l'amidon prégélatinisé de légumineuses comprend au moins un constituant supplémentaire, de préférence une substance aux fruits, qui est liée par sorption et/ou, de préférence, incorporée à la matrice d'amidon (formulation d'amidon prégélatinisé de légumineuses).

9. Produit alimentaire déshydraté suivant la revendication 8, caractérisé en ce qu'une quantité d'au moins 5, avantageusement d'au moins 20 et, de préférence, d'au moins 50% en poids/poids de la substance aux fruits se présente sous forme de formulation d'amidon prégélatinisé de légumineuses.

10. Produit alimentaire déshydraté suivant la revendication 8 ou la revendication 9, caractérisé en ce que la formulation d'amidon prégélatinisé de légumineuses contient 10 à 95, avantageusement 25 à 80 et, de préférence, 35 à 65% en poids/poids d'amidon.

11. Produit alimentaire déshydraté suivant l'une quelconque des revendications 1 à 10, caractérisé en ce que la substance aux fruits que renferme ce produit est présente au moins partiellement sous forme d'une poudre de fruits, d'un pulpe de fruits lyophilisée et/ou d'une pâte de formulation d'amidon.

12. Produit alimentaire déshydraté suivant l'une quelconque des revendications 1 à 11, caractérisé en ce qu'il contient, comme substance aux fruits, la substance sèche tirée de la tomate, de la pomme, de l'orange, de la poire, de l'abricot, de la framboise, de la mûre, de la groseille, de la carotte, du raifort, de champignons, du céeleri-rave, du poireau, du chou-fleur ou de l'épinard.

13. Procédé de production d'un produit alimentaire déshydraté suivant l'une quelconque des revendications 1 à 12, par mélange d'une substance aux fruits à de l'amidon et, facultativement, des agents aromatisants, des charges et/ou des renforçateurs ainsi que, facultativement, des agents épaississants supplémentaires, caractérisé en ce qu'au moins une partie de l'amidon ajouté est un amidon de légumineuses qui, avant, pendant ou après le mélange à un ou plusieurs autres constituants du produit, est au moins partiellement transformé en un amidon prégélatinisé de légumineuses ayant un diamètre de grains de 0,1 à 10 mm par le procédé connu de prégélatinisation dans des conditions douces et de séchage, suivi si nécessaire par une réduction du diamètre des grains.

14. Procédé suivant la revendication 13, dans lequel la prégélatinisation est effectuée par séchage dans un sécheur à cylindres.

15. Procédé suivant la revendication 13 ou la revendication 14, caractérisé en ce que l'amidon prégélatinisé de légumineuses est soumis à un traitement thermique après séchage.